# EUROPÄISCHE PATENTSCHRIFT

(11) **EP 2 606 279 B1**
(45) Veröffentlichungstag und Bekanntmachung des Hinweises auf die Patenterteilung: **06.04.2016**
(21) Anmeldenummer: 11764487.2
(22) Anmeldetag: 05.07.2011
(51) Int. Cl.: F22B 37/00, F28G 15/00, G01N 1/08, G21D 1/00, G01N 1/04, G01N 1/10

(54) **VERFAHREN UND VORRICHTUNG ZUR ENTNAHME EINER PROBE AUS EINEM DAMPFERZEUGER**
METHOD AND DEVICE FOR TAKING A SAMPLE IN A STEAM GENERATOR
PROCÉDÉ ET DISPOSITIF DE PRÉLÈVEMENT D'UN ÉCHANTILLON DANS UN GÉNÉRATEUR DE VAPEUR

(30) Priorität: 17.08.2010 DE 102010039413
(43) Veröffentlichungstag der Anmeldung: 26.06.2013
(73) Patentinhaber: AREVA GmbH, 91052 Erlangen (DE)
(72) Erfinder: SEEBERGER, Erich, 91091 Grossenseebach (DE)
(74) Vertreter: Meissner, Bolte & Partner GbR
(86) Internationale Anmeldenummer: PCT/EP2011/061329
(87) Internationale Veröffentlichungsnummer: WO 2012/022531

(56) Entgegenhaltungen:
- EP-A2- 0 120 355
- DE-A1- 3 104 859
- DE-A1- 19 705 320

## Beschreibung

Die Erfindung betrifft ein Verfahren und eine Vorrichtung zur Entnahme einer Probe aus einem Dampferzeuger. Der Dampferzeuger ist Teil eines Kernkraftwerks. Die Probe wird von einer Ablagerung an einer Sekundärseite einer Rohrbodenplatte des Dampferzeugers genommen.

Ein Dampferzeuger als Teil eines Kernkraftwerks weist einen Primär- und einen Sekundärkreislauf auf. Der Kühlwasser führende Primärkreislauf führt zum Kernreaktor. Die Sekundärseite führt zu einer Dampfturbine. Im Dampferzeuger wird die thermische Energie des Kühlwassers des Primärkreislaufes in den Sekundärkreislauf übergeben, indem auf der Sekundärseite zugeführtes Wasser in Wasserdampf gewandelt wird. Der Dampferzeuger ist ein etwa zylinderförmiges, senkrecht stehendes Gefäß, welches durch eine horizontal verlaufende Rohrbodenplatte in einen oberen und unteren Teil geteilt ist. Der untere Teil ist der Primärbereich und gehört zum Primärkreislauf, der obere Teil ist der Sekundärbereich und gehört zum Sekundärkreislauf. Der Sekundärbereich weist eine Vielzahl von U-förmigen Dampferzeugerrohren auf, deren Inneres mit dem Primärbereich in Verbindung steht. Hierzu durchsetzen die Dampferzeugerrohre dichtend die Rohrbodenplatte. Die endseitigen Ein- und Austrittsöffnungen der Dampferzeugerrohre befinden sich ausschließlich an der Unterseite, also der Primärseite der Rohrbodenplatte. Die Oberseite, also Sekundärseite der Rohrbodenplatte ist daher mit einer Vielzahl von Dampferzeugerrohren mit einem Durchmesser von ca. 20mm im Abstand von nur wenigen Millimetern bestückt und gehört zur Sekundärseite des Dampferzeugers.

Während des Betriebs des Kernkraftwerks bilden sich an der Oberseite der Rohrbodenplatte Ablagerungen aus dem sekundärseitigen Wasserdampfkreislauf. Die Sekundärseite ist also die Ablagerungen aufweisende sekundärseitige Oberseite der Rohrbodenplatte, auf welcher sich die Ablagerungen in Schwerkraftrichtung absetzen. Zum Entfernen von schlammartigen Ablagerungen sind verschiedene Reinigungsverfahren bekannt. Diese werden während eines Revisionsstillstands des Kernkraftwerks durchgeführt. Zum Beispiel wird beim bekannten Rohrgassenreinigen durch ein sekundärseitiges Handloch im Dampferzeuger eine beweglichen Lanze eingeführt, die zwischen den Dampferzeugerrohren in die sogenannten Rohrgassen eingeführt wird. Mit anderen vorderem Ende unter Hochdruck austretender Flüssigkeit werden die Ablagerungen ausgeschwemmt.

Neben schlammförmigen Ablagerungen können sich jedoch auf der Sekundärseite auch harte bzw. verkrustete, bis zur Glashärte reichende Ablagerungen bilden. Mit den o.g. bekannten sekundärseitigen Sprühreinigungsverfahren sind diese Ablagerungen nicht entfernbar. Um geeignete Reinigungsmittel zu finden, muss zunächst die genaue Art, Beschaffenheit, Zusammensetzung etc. der Ablagerungen bestimmt werden. Hierzu ist es notwendig, eine Probe der Ablagerungen zu nehmen, um diese in einem Labor zu analysieren. Ein Teil der Ablagerungen muss also in Form einer Probe abgetragen werden. Hierzu ist ein Werkzeug erforderlich. Da die Ablagerungen nur in einem Bereich im Inneren der Rohrbündel auftreten, ist wegen der beengten Platzverhältnisse eine Probennahme mit einem Werkzeug durch das sekundärseitige Mannloch nicht praktikabel. Aufgrund der Härte der Ablagerungen wird eine derartige Probe auch als Kratzprobe bezeichnet.

Ein Werkzeug zur Entnahme einer solchen Probe offenbart das Dokument DE3104859A1

Aufgabe der vorliegenden Erfindung ist es, ein verbessertes Verfahren und eine verbesserte Vorrichtung zur Entnahme einer Probe der Ablagerungen anzugeben.

Hinsichtlich des Verfahrens wird die Aufgabe gelöst durch ein Verfahren gemäß Patentanspruch 1. Auch dieses wird während eines Revisionsstillstands des Kernkraftwerks durchgeführt. Zunächst wird mindestens ein Dampferzeugerrohr aus der Rohrbodenplatte entfernt, um eine die Rohrbodenplatte durchsetzende Heizrohrbohrung freizulegen. Die entsprechende Entfernung eines Dampferzeugerrohrs ist als sogenanntes "Ziehen" bekannt und stellt ein gängiges Verfahren dar. In der Regel wird hierbei ein sich an die Rohrbodenplatte anschließender Teil eines Schenkels eines bestimmten Dampferzeugerrohres abgeschnitten und entfernt. Nach Entfernung des Dampferzeugerrohrs verbleibt also eine bündig mit der Ober- und Unterseite, also Sekundär-und Primärseite der Rohrbodenplatte abschließende Heizrohrbohrung.

Das zum bekannten "Ziehen" gehörende Versiegeln und mechanische Stabilisieren des Restes des gezogenen Dampferzeugerrohres findet erst nach Beendigung des erfindungsgemäßen Verfahrens statt. So wird die entstandene Verbindung zwischen Primär- und Sekundärkreislauf wieder geschlossen. Das erfindungsgemäße Verfahren wird also vorher durchgeführt, wenn die Heizrohrbohrung an der Ziehposition der Rohrbodenplatte noch frei zugänglich ist und einen Durchgang zwischen Primär- und Sekundärseite der Rohrbodenplatte ermöglicht.

Erfindungsgemäß wird unter Anderem von der Primärseite der Rohrbodenplatte, welcher der die Ablagerungen aufweisenden Sekundärseite gegenüber liegt, ein Abtragwerkzeug einer Vorrichtung zur Entnahme der Probe in die Heizrohrbohrung eingeführt. Anschließend wird mit dem Abtragwerkzeug ein Teil der Ablagerungen mechanisch gelöst. Die gelösten Ablagerungen bilden die Probe. Diese wird durch die Heizrohrbohrung zur Primärseite transportiert und aus dem Dampferzeuger entfernt. Abschließend wird noch das Abtragwerkzeug aus dem Dampferzeuger entfernt.

Das Abtragwerkzeug ist also Teil der erfindungsgemäßen Vorrichtung gemäß unabhängigem Anspruch 4, die unten näher erläutert wird. Das Abtragwerkzeug und ggf. weitere Teile der Vorrichtung werden durch das primärseitige, sich also unterhalb der Bodenplatte befindliche Mannloch des Dampferzeugers in diesen eingebracht.

Das Einbringen der Vorrichtung in den Dampferzeuger erfolgt ferngesteuert mit einem vorhandenen Kalottenprüfmanipulator oder unter Personaleinsatz. Ansonsten erfolgt deren Bedienung besonders diejenige des Abtragwerkzeugs per Fernsteuerung. Mit dem Abtragwerkzeug werden am Ende des Verfahrens natürlich auch die restlichen Teil der Vorrichtung aus dem Dampferzeuger entfernt.

Erfindungsgemäß erfolgt also die Entnahme der Probe auf der Sekundärseite von der Primärseite aus durch die Rohrbodenplatte bzw. eine freigelegte Heizrohrbohrung. Diese weist bei bekannten Kernkraftwerken zum Beispiel einen Durchmesser von 19mm auf. Der Rohrboden selbst weist zwischen Primär- und Sekundär- beziehungsweise Ober- und Unterseite eine Dicke von ca. 640mm auf.

Selbstverständlich kann zum Beispiel nach Ziehen des Dampferzeugerrohres und vor Einbringen des Abtragwerkzeugs eine visuelle Inspektion der Oberseite, zum Beispiel mit Hilfe eines bekannten, von der Primärseite durch die Heizrohrbohrung einführbaren Endoskops erfolgen. So kann zum Beispiel die Sekundärseite inspiziert werden, um Dicke und Form der Ablagerungen zu ermitteln und um ein geeignetes Abtragwerkzeug zu wählen. In der Vorrichtung stehen nämlich in der Regel eine Reihe verschiedenster einsetzbarer Abtragwerkzeuge zur Auswahl.

Da der Zugang durch die Heizrohrbohrung nun besteht, erfolgt der erfindungsgemäße Abtransport der Probe durch die Heizrohrbohrung zur Primärseite auf einfache Weise.

Das Verfahren bzw. die Vorrichtung wird im folgenden auch durch Eigenschaften definiert, die sich auf die Mittellängsachse der Heizrohrbohrung beziehen. Dies ist nur der Einfachheit halber zu verstehen: Die Vorrichtung selbst weist diese Eigenschaften unabhängig von der Heizrohrbohrung auch bezüglich einer vorrichtungseigenen Mittenachse auf. Die Erläuterungen bezüglich der Mittellängsachse erläutern jedoch gleich die Funktionalität beim Einsatz der Vorrichtung in vereinfachter und daher verständlicherer Weise. Sie beziehen sich auf einen Montagezustand des Abtragwerkzeugs. Ein sogenannter Montagezustand des Werkzeugs oder der Vorrichtung ist gegeben, wenn diese zur Durchführung des eigentlichen Abtragvorgangs in die Heizrohrbohrung eingebracht ist, der Träger also beispielsweise fixiert ist.

Die Vorrichtung kann einen Träger aufweisen, der das Abtragwerkzeug trägt. Der Träger zusammen mit dem Abtragwerkzeug bildet dann einen Manipulatorarm. In einer bevorzugten Ausführungsform des Verfahrens werden Träger und Abtragwerkzeug bzw. der Manipulatorarm mit dem Abtragwerkzeug voraus von der Primärseite her in die Heizrohrbohrung eingeführt, z.B. bis das Werkzeug an der Sekundärseite im Bereich der Ablagerungen aus der Bohrung vorsteht. Der Träger wird dann in der Heizrohrbohrung fixiert. Bei fixiertem Träger wird dann das Abtragwerkzeug relativ zum Träger bewegt, um die Probe von der Ablagerung zu lösen. Die Fixierung des Trägers in der Heizrohrbohrung erfolgt hier in der Regel bezüglich einer Mittellängsachse der Heizrohrbohrung in Axial-, Radial- und Umfangsrichtung. Vorteilhaft ist hierbei, dass durch den fixierten Träger ein definierter Arbeitspunkt beziehungsweise eine definierte Fixierung für das Abtragwerkzeug geschaffen wird. Das Werkzeug kann ausgehen von dieser Position relativ zum fixierten Träger und damit zur Rohrbodenplatte und den Ablagerungen kontrolliert und gezielt bewegt werden, um die Probe zu lösen.

Erfindungsgemäß wird das Abtragwerkzeug - im Montagezustand - um eine parallel zur Mittellängsachse der Heizrohrbohrung verlaufende Antriebsachse rotiert, um die Probe zu lösen. Durch ein rotierendes Werkzeug kann besonders gut eine Probenentnahme durchgeführt werden. Das Abtragwerkzeug ist dann beispielsweise ein rotierender Fräs- oder Schleifkopf. Die Rotation parallel zur Mittellängsachse der Heizrohrbohrung ist besonders einfach durchzuführen, weil beispielsweise hierzu eine das Abtragwerkzeug starr tragende, um eine Antriebsachse parallel zur Mittellängsachse der Heizrohrbohrung rotierende Antriebswelle benutzt werden kann.

Erfindungsgemäß wird des Weiteren die Antriebsachse bezüglich der Mittellängsachse in Radialrichtung zugestellt und in Umfangsrichtung vorgeschoben, um die Probe zu lösen. So kann das im Umfang kreisförmige Abtragwerkzeug zunächst konzentrisch zur Mittellängsachse durch die Bohrung eingeführt werden. Ragt es dann über die Bohrung hinaus, kann es exzentrisch bewegt werden und damit über den Rand der Bohrung hinausragen, so dass es in Eingriff mit den Ablagerungen gelangt.

Mit anderen Worten wird also beispielsweise der o.g. rotierende Fräs- oder Schleifkopf als Abtragwerkzeug ausgehend von einer Position, in welcher die Antriebssachse mit der Mittellängsachse der Bohrung zusammenfällt in Radialrichtung von der Mittellängsachse auf die Ablagerung zubewegt, also zugestellt werden, bis eine gewünschte Eindringtiefe in die Ablagerung erreicht ist und der Abtragvorgang beginnt. Das Werkzeug wird dann kreisförmig, indem also die Antriebssachse die Mittellängsachse mit konstantem Radius umkreist, in Umfangsrichtung vorgeschoben. Nach einer vollen Umdrehung ist ein ringförmiger Bereich der Ablagerung als Probe entnommen und das Abtragwerkzeug kann beispielsweise ein Stück weiter in Radialrichtung in die Ablagerung hinein zugestellt werden. Das Werkzeug wird dann wieder in Umfangsrichtung um 360° vorgeschoben, wobei die Antriebsachse mit größerem Radius wieder die Mittellängsachse umkreist. Sowohl Zustellung als auch Vorschub können hierbei als stufenlose Parameter gewählt werden, um den Abtragvorgang optimal an die Ablagerungen anzupassen. Eine Zustellung kann außerdem in Axialrichtung der Mittellängsachse der Bohrung erfolgen, um Ablagerungen abzutragen, die eine größere Höhe als die Höhe des Abtragwerkzeugs aufweisen.

Die Vorrichtung kann auch einen Sammelbehälter für die Probe aufweisen. Dieser ist in der Regel so angeordnet, dass er sich im Montagezustand in der Nähe der abzutragenden Ablagerung befindet. In einer bevorzugten Ausführungsform wird die Probe nach dem Lösen von der Ablagerung in einem Sammelbehälter der Vorrichtung aufgenommen und anschließend zusammen mit diesem zur Primärseite transportiert. Der Sammelbehälter wird beispielsweise auf der Primärseite geleert oder gänzlich zusammen mit den Vorrichtungskomponenten aus dem Dampferzeuger entfernt.

Hinsichtlich der Vorrichtung wird die Aufgabe gelöst durch eine Vorrichtung gemäß Patentanspruch 4. Die Vorrichtung und deren Ausgestaltungen zusammen mit ihren Vorteilen wurden zum Teil bereits im Zusammenhang mit dem erfindungsgemäßen Verfahren erläutert. Die Vorrichtung weist also ein Abtragwerkzeug auf, welches zum mechanischen Lösen eines Teils der Ablagerungen als Probe dient. Das Abtragwerkzeug ist von der Primärseite der Rohrbodenplatte aus in eine freigelegte Heizrohrbohrung der Rohrbodenplatte einführbar beziehungsweise bis zu deren Sekundärseite bzw. der dortigen Ablagerung durchführbar.

In einer bevorzugten Ausführungsform weist die Vorrichtung einen in der Heizrohrbohrung fixierbaren Träger auf. Das Abtragwerkzeug ist dann relativ zum Träger bewegbar. Träger und Abtragwerkzeug bilden einen Manipulatorarm.

In einer bevorzugten Ausführungsform weist die Vorrichtung ein am Außenumfang des Trägers angeordnetes, gegen die Innenwand der Heizrohrbohrung abstützbares Spannelement auf. Das Spannelement stützt im Montagezustand den Träger an der Innenwand der Heizrohrbohrung ab. Es verspannt also den Träger in der Heizrohrbohrung in Radial-, Axial- und Umfangsrichtung bezüglich der Mittellängsachse der Bohrung. In einer bevorzugten Ausführungsform ist das Spannelement ein zur Verspannung mit einem Medium druckbefüllbares Element, insbesondere eine den Träger ringförmig umgebende Manschette, die mit Druckluft befüllbar ist. Die Manschette kann dann z.B. an Ihrer Innenseite zum Träger hin ein Gleitlager aufweisen, so dass sich die Manschette an ihrem Außenumfang fest an der Innenwand der Heizrohrbohrung anlegt, der Träger aber an ihrem Innenumfang gleitet, d.h. um die Mittellängsachse der Heizrohrbohrung rotierbar ist. Zum leichteren Entnehmen des Trägers aus der Heizrohrbohrung kann das Medium aktiv aus der Manschette gesaugt werden, um diese zu komprimieren. Die Fixierung geschieht zum Beispiel durch eine mit Druckluft von 10bar Druck befüllbare Gummimanschette.

Erfingdungsgemäß ist im Montagezustand, wenn das Abtragwerkzeug also durch die Heizrohrbohrung durchgeführt ist und auf der Sekundärseite der Rohrbodenplatte liegt, das Abtragwerkzeug um einen parallel zur Mittellängsachse der Heizrohrbohrung verlaufende Antriebsachse rotierbar, um die Probe von der Ablagerung zu lösen. Des Weiteren ist erfindungsgemäß im Montagezustand die Antriebsachse bezüglich der Mittellängsachse in Radialrichtung zustellbar und in Umfangsrichtung, das heißt also kreisförmig die Mittellängsachse umkreisend vorschiebbar, um die Probe zu lösen. Zusätzlich kann das Abtragwerkzeug auch axial bezüglich der Mittellängsachse verstellbar sein. In einer bevorzugten Ausführungsform weist der Träger eine Antriebswelle auf. Mit der Antriebswelle ist das Abtragwerkzeug fest verbunden die Antriebswelle ist um eine Antriebsachse rotierbar, wobei die Antriebsachse parallel zur Mittellängsachse verläuft. Die Antriebsachse ist bezüglich der Mittellängsachse in Radial-und Umfangsrichtung zustell- und vorschiebbar.

Der Träger kann auch mehrteilig ausgeführt sein. In einer bevorzugten Ausgestaltung dieser Ausführungsform besitzt der Träger außerdem eine im Montagezustand um die Mittellängsachse rotierbare Vorschubwelle. Die Vorschubwelle enthält eine bezüglich der Mittellängsachse exzentrische und parallel zu dieser verlaufende Zylinderbohrung, in welcher eine zylindrische Zustellwelle gelagert ist, welche wiederum um eine Zustellachse drehbar in der Vorschubwelle gelagert ist. In der Zustellwelle wiederum ist exzentrisch die Antriebsachse gelagert. Die Antriebs- kann auch als Fräser-, die Zustell- als Exzenterwelle bezeichnet werden.

Vorschub-, Zustell- und Antriebswelle sind jeweils unabhängig voneinander um ihre jeweiligen Rotationsachsen, nämlich die Mittellängs-, die Zustell- und die Antriebsachse rotierbar. Hierzu ist beispielsweise jeder Welle ein eigener, unabhängig voneinander steuerbarer Antrieb zugeordnet. Die Antriebe befinden sich beispielsweise in einer Antriebseinheit unterhalb des Rohrbodens, welche zum Beispiel wiederum an einer Adapterplatte befestigt ist. Die Adapterplatte wird z.B. in benachbarten, also anderen als der zu durchsetzenden Heizrohrposition an der Unter- beziehungsweise Primärseite des Rohrbodens gehalten. Die Antriebe besitzen eine Fernsteuerung, d.h. sie werden per Fernsteuerung betrieben.

In einer bevorzugten Ausführungsform enthält die Vorrichtung einen Sammelbehälter zur Aufnahme der Probe. Mit anderen Worten wird die Probe in die Vorrichtung selbst eingebracht und kann ohne Zusatzaufwand mit dieser am Abschluss des Abtragvorgangs aus dem Dampferzeuger entfernt und von dort weitergeleitet beziehungsweise weiterverarbeitet werden.

Der Sammelbehälter befindet sich günstigerweise am Träger bzw. Manipulatorarm in der Nähe des Abtragwerkzeugs. Der Sammelbehälter ist insbesondere am Träger als stirnseitige Vertiefung ausgeführt. Da die Heizrohrbohrung senkrecht verläuft und der Träger mit seiner Stirnseite nach oben weist, sammelt sich die vom Abtragwerkzeug abgetragene Probe alleine durch Schwerkraft in der stirnseitigen Vertiefung des Trägers. Beim Zurückziehen des Manipulatorarms aus der Heizrohrbohrung wird so die Probe mitgenommen.

Da die gesamte Vorrichtung beispielsweise durch eine Heizrohrbohrung von 19mm Durchmesser zu führen ist, finden in der Vorrichtung hauptsächlich Gleitlager Verwendung, um zum Beispiel voluminöse Kugellager zu vermeiden. So sind beispielsweise Antriebswelle, Zustellwelle und Vorschubwelle jeweils durch Gleitlager zylinderförmig ineinander gelagert.

Die Abtragwerkzeuge sind in der Regel beliebig austauschbar, zum Beispiel in Form von verschiedenen Fräs-, Schleifköpfen oder Messern. Die Zustellparameter des Abtragwerkzeugs bezüglich der Ablagerungen sind entsprechend an die Werkzeuge und die Art der Ablagerung anzupassen, zum Beispiel bezüglich Drehzahl des Abtragwerkzeugs, Zustellung z.B. im Bereich 0,1 - 3mm oder Vorschubgeschwindigkeit, d.h. Winkelgeschwindigkeit, mit welcher die Antriebsachse die Mittellängsachse umkreist.

Für eine weitere Beschreibung der Erfindung wird auf die Ausführungsbeispiele der Zeichnungen verwiesen. Es zeigen jeweils in einer schematischen Prinzipsskizze:
- Fig. 1: einen Teil eines Dampferzeugers im Schnitt,
- Fig. 2: den Dampferzeuger aus Fig.1 mit erfindungsgemäßer Vorrichtung,
- Fig. 3: den Manipulatorarm der Vorrichtung im Detail,
- Fig. 4: eine Draufsicht auf den Manipulatorarm aus Fig.3 in Richtung des Pfeils IV,
- Fig. 5: das obere Ende des Manipulatorarms mit Manschette,
- Fig. 6: ein Abtragwerkzeug,
- Fig. 7: eine Draufsicht auf die Sekundärseite des Rohrbodens aus Fig.3 in Richtung des Pfeils IV.

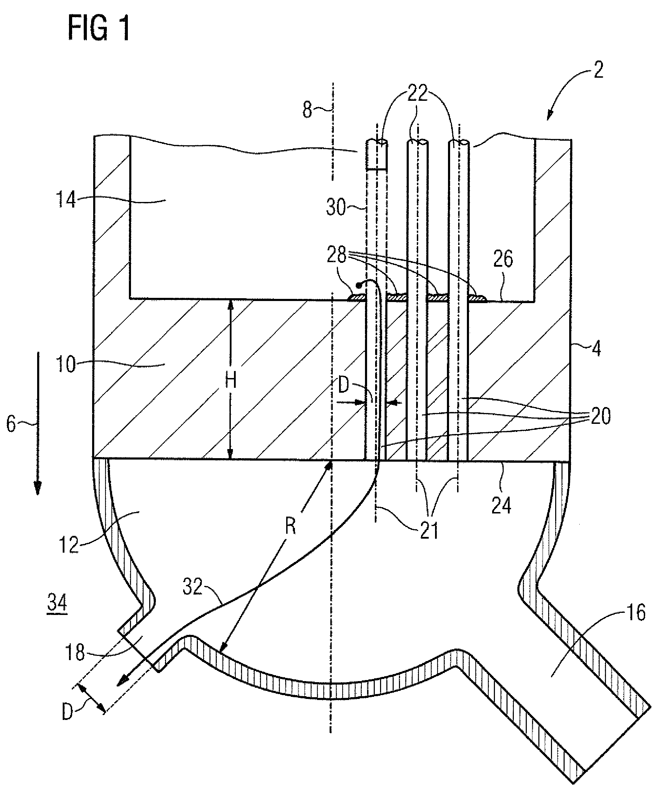

Fig. 1 zeigt als Ausschnitt aus einem Kernkraftwerk 2 einen Teil dessen aufrecht stehenden Dampferzeugers 4, nämlich dessen unteren Teil, im Schnitt. Die Schwerkraftrichtung 6 verläuft also parallel zur Mittellängsachse 8 des Dampferzeugers 4. Der Dampferzeuger 4 enthält eine quer hierzu und demnach horizontal verlaufende Rohrbodenplatte 10, die eine Höhe H von ca. 700mm aufweist. Die Rohrbodenplatte 10 trennt einen unten liegenden Primärbereich 12 des Dampferzeugers 4 von dessen Sekundärbereich 14. Der Primärbereich steht über einen Anschlussstutzen 16 in Verbindung mit dem nicht dargestellten Reaktordruckbehälter des Kernkraftwerks 2 und führt im Betrieb primärseitiges Kühlwasser. Gezeigt ist der Revisionsstillstand des Kernkraftwerks 2, weshalb das Kühlwasser entnommen ist. Der Primärbereich 12 bildet eine durch ein Mannloch 18 zugängliche, d.h. von nicht dargestelltem Servicepersonal begehbare Dampferzeugerkalotte.

Die Rohrbodenplatte 8 weist durchgängige Heizrohrbohrungen 20 mit Mittellängsachsen 21 auf. Im Sekundärbereich 14 schließt sich an je zwei dieser Heizrohrbohrungen 20 ein U-förmiges Dampferzeugerrohr 22 an, welches den Sekundärbereich 14 durchsetzt. Im Betrieb des Kernkraftwerks 2 durchströmt primärseitiges Kühlwasser des Primärbereich 12, die Heizrohrbohrungen 20 und die Dampferzeugerrohre 22. Im Sekundärbereich 14 wird dadurch sekundärseitiges Kühlwasser - welches beim Revisionsstillstand ebenfalls entfernt ist - verdampft und zu einer nicht dargestellten Dampfturbine weitergeleitet.

Die Rohrbodenplatte 10 weist als untere Flachseite bzw. Unterseite eine dem Primärbereich 12 zugewandte Primärseite 24 und eine gegenüberliegende dem Sekundärbereich 14 zugewandte Sekundärseite 26 auf. Da beim aufrecht stehenden Dampferzeuger 4 die Sekundärseite 26 den unterseitigen Boden des Sekundärbereiches 14 darstellt, setzen sich dort beim Betrieb des Kernkraftwerks Ablagerungen 28 ab. Im Gegensatz zu nicht dargestellten weichen Ablagerungen, welche durch ein bekanntes Rohrgassenreinigungsverfahren entfernt werden können, sind die Ablagerungen 28 harte, bis zur Glashärte reichende Ablagerungen, welche mit den bekannten mechanischen, in der Regel Sprühreinigungsverfahren nicht entfernbar sind. Von den Ablagerungen 28 soll nun eine Probe mit dem erfindungsgemäßen Verfahren genommen werden.

Erfindungsgemäß wird die Probe vom Primärbereich 12 aus über eine die Rohrbodenplatte 10 durchsetzende Heizrohrbohrung 20 genommen. Da Primär- und Sekundärkreislauf und damit auch Primärbereich 12 und Sekundärbereich 14 hermetisch voneinander abgekapselt sind, muss zunächst ein Zugang geschaffen werden. Hierzu wird mit einem bekannten, nicht näher erläuterten Verfahren eines der Heizrohre 22 teilweise entfernt, im Fachjargon "Ziehen" genannt. Ein sich an die Rohrbodenplatte 10 anschließender, in Fig.1 gestrichelt dargestellter Abschnitt 30 des Dampferzeugerrohres 22 wird hierbei sowohl von der Rohrbodenplatte 10 als auch vom verbleibenden Dampferzeugerrohr 22 abgeschnitten und durch die Heizrohrbohrung 20 entfernt. Die Heizrohrbohrung 20 schließt damit bündig mit der Primärseite 24 und der Sekundärseite 26, also den beiden Flachseiten der Rohrbodenplatte 10 ab. Die Heizrohrbohrung 20 weist nun einen Innendurchmesser D von 19mm auf. Der kalottenförmige Primärbereich 12 weist einen Innenradius R von etwa 1600mm auf. Dort herrscht eine relativ hohe Äquivalentdosis vor. Das Mannloch 18 weist einen Durchmesser D von ca. 400-420mm auf. Durch das Ziehen des Dampferzeugerrohrs 22 ist somit ein durch einen Pfeil 32 angedeuteter Zugang vom Außenraum 34 des Dampferzeugers 4 zur Ablagerung 28 geschaffen. Auf diesem Weg soll die Probennahme von der Ablagerung 28 geschehen.

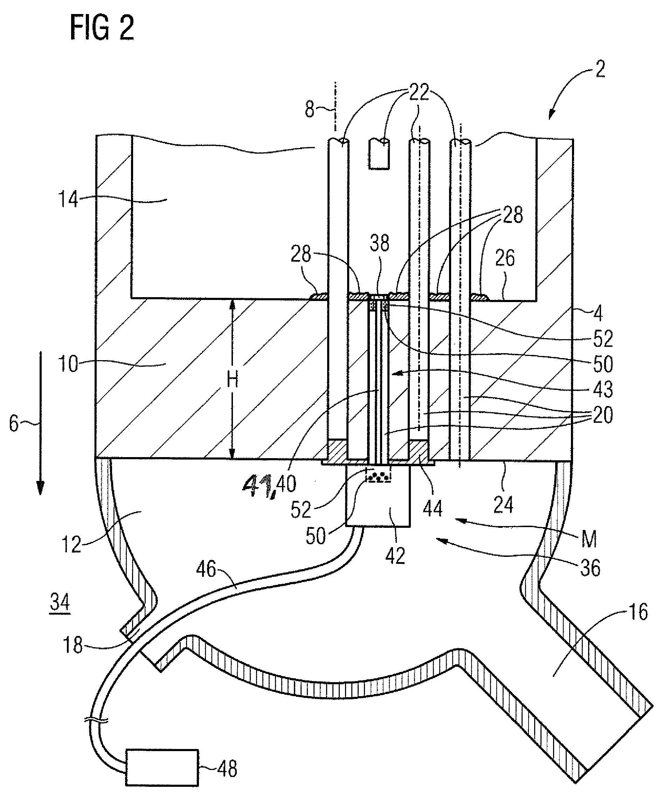

Fig. 2 zeigt eine erfindungsgemäße Vorrichtung 36, von der zumindest ein Teil durch das Mannloch 18 in den Dampferzeuger 4 eingebracht wird. Die Vorrichtung 36 weist im wesentlichen ein in die Heizrohrbohrung 20 beziehungsweise durch diese bis zur Sekundärseite 26 hindurchführbares Abtragwerkzeug 38 auf. Das Abtragwerkzeug 38 ist auf einem Träger 41 in Form einer Antriebswelle 40 fest angebracht. Träger 41 und Abtragwerkzeug 38 bilden zusammen also einen Manipulatorarm 43. Fig.2 zeigt den Montagezustand M der Vorrichtung 36, wenn nämlich das Abtragwerkzeug 38 bzw. der Manipulatorarm 43 in den Bereich der Ablagerung 28 verbracht ist.

Die Antriebswelle 40 ist von einer Antriebseinheit 42 angetrieben. Da das Abtragwerkzeug 38 starr auf der Antriebswelle 40 montiert ist, wird so das Abtragwerkzeug 38 angetrieben. Die Antriebseinheit 42 wiederum ist an einer Adapterplatte 44 befestigt. Die Adapterplatte 44 ist an der Rohrbodenplatte 10 befestigt. Dies geschieht zum Beispiel durch Eingriff in der aktuellen Heizrohrborhung 20 benachbarte Heizrohrbohrungen 20, in welche beispielsweise Haltezapfen verklemmend eingeführt sind.

Die Antriebseinheit 42 ist über ein Steuerkabel 46 mit einer Kontrolleinheit 48 verbunden, die im Außenraum 34 angeordnet ist und die die Steuerung sämtlicher Funktionen der Vorrichtung 36 im Wege einer Fernsteuerung ermöglicht.

Im Betrieb der Vorrichtung 36 wird über die Kontrolleinheit 48 die Antriebseinheit 42 angesteuert, um wiederum das Abtragwerkzeug 38 zu steuern. Dieses wird an die Ablagerungen 28 angefahren bzw. zugestellt, um von diesen einen Teil mechanisch abzulösen. Die Antriebseinheit 42 enthält hierzu verschiedenste Antriebe, Getriebe und Geber, um das Abtragwerkzeug 38 - beispielsweise einen Fräser - zu steuern. Z.B. wird dessen Rotation und auch die Bewegung des Manipulatorarms 43 in Form von Zustell- und Vorschubbewegungen bewirkt.

Die abgelösten Teile der Ablagerung 28 gelangen als Probe 50 in einen Sammelbehälter 52 der Vorrichtung 36, der beispielsweise in der Nähe der Abtragswerkzeug 38 an der Antriebswelle 40 oder alternativ im Bereich der Antriebseinheit 42 vorgesehen ist.

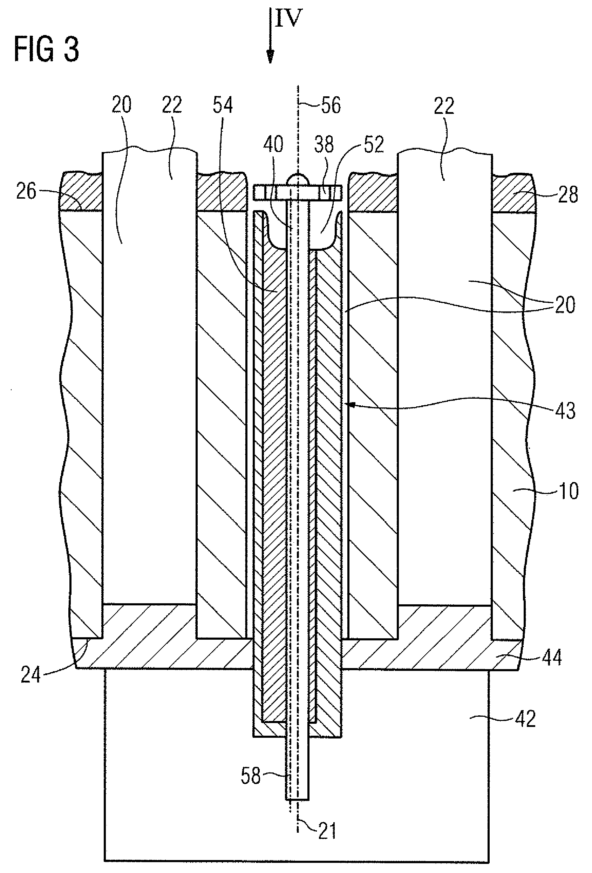

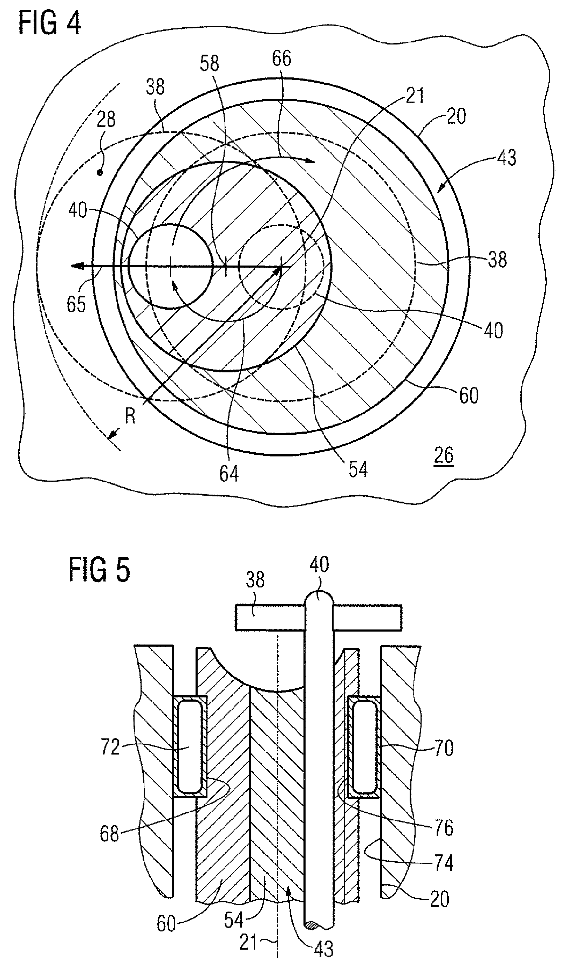

Fig. 3 zeigt einen Teil der Vorrichtung 38, besonders den Manipulatorarm 43, im Detail. Fig.3 zeigt wieder den Montagezustand M, Fig.4 zeigt in Richtung des Pfeils IV eine Draufsicht auf den Manipulatorarm 43. Figs.3 und 4 zeigen eine Ausführungsform der erfindungsgemäßen Vorrichtung, bei welcher die Antriebswelle 40 exzentrisch in einer Zustellwelle 54 gelagert ist. Die Antriebsachse 56, also die Mittellängs- und Rotationsachse der Antriebswelle 40 fällt nicht mit der Mittellängsachse der Zustellwelle 54, nämlich der Zustellachse 58 zusammen. Die Zustellwelle 54 wiederum ist exzentrisch in einer Vorschubwelle 60 gelagert, die wiederum um ihre Mittellängsachse rotierbar ist. Im Montagezustand M ist der Manipulatorarm 43 bzw. die Vorschubwelle 60 derart in der Heizrohrbohrung 20 gelagert, dass die Mittellängsachse der Vorschubwelle mit der Mittellängsachse 21 zusammenfällt.

Fig. 3 und die gestrichelte Position in Fig. 4 zeigt die Zustellwelle 54 in einer Rotationsposition, in der die Antriebswelle 40 ins Zentrum des Manipulatorarms 43 und damit ins Zentrum der Vorschubwelle 60 geschwenkt ist. Die Antriebsachse 56 fällt damit auch mit der Mittellängsachse 21 zusammen. Abtragwerkzeug 38, Antriebswelle 40, Zustellwelle 54 und Vorschubwelle 60 bilden also hier zusammen den in die Heizrohrbohrung 20 einführbaren Manipulatorarm 43. Diese Position der Zustellwelle 54 bildet eine Ein- und Ausführposition für den Manipulatorarm 62 bezüglich der Heizrohrborhung 20, da das Abtragwerkzeug 38 zentral durch die Heizrohrbohrungen 20 durchführbar ist und nicht über den Querschnitt des restlichen Manipulatorarms 43, insbesondere der Vorschubwelle 60 hinausragt.

Fig. 4 zeigt die Heizrohrbohrung 20 mit dem darin einliegenden Manipulatorarm 62 und dem Abtragwerkzeug 38 gestrichelt in der Position gemäß Fig. 3. Gestrichelt ist die zugehörige Position der Antriebswelle 40 gezeigt. Gegenüber Fig.3 ist in Fig.4 jedoch die Zustellwelle 54 um die Zustellachse 58 in Richtung des Pfeils 64 um 180° geschwenkt. Hierdurch erfolgt effektiv eine Zustellung des Abtragwerkzeugs 38 in die durch einen Pfeil symbolisierte Radialrichtung 65. Da die Zustellwelle 54 exzentrisch in der Vorschubwelle 60 gelagert ist, bewegt sich daher die Antriebswelle 40 zusammen mit dem Abtragwerkzeug 38 bezüglich der Mittellängsachse 21 radial nach außen. So gelangt das Abtragwerkzeug 38 in Kontakt mit den die Heizrohrbohrung 20 umgebenden Ablagerungen 28 auf der Sekundärseite 26 Fig. 4 zeigt die maximale Zustellposition für das Abtragwerkzeug 38, das damit in einem Bereich mit Durchmesser 25mm (Radius R=12,5mm) um die Mittellängsachse 21 in Eingriff mit den Ablagerungen 28 gelangen kann. In diesem Bereich kann eine Probe 50 abgetragen werden. Bei einem minimalen Abstand von 3,6mm zweier Dampferzeugerrohre 22 mit Durchmesser 19mm verbleibt damit ein Sicherheitsabstand von 0,6mm zwischen dem Abtragebereich mit Durchmesser 25mm und dem benachbarten Dampferzeugerrohr 22.

Der gesamte o.g. Bereich kann daher abgetragen werden, da ein Vorschub der Antriebswelle 40 und damit des Abtragwerkzeugs 38 in Richtung der durch einen Pfeil symbolisierten Umfangsrichtung 66 durch Rotation der Vorschubwelle 60 um die Mittellängsachse 21 erfolgt. Durch eine nicht dargestellte Rotation der Zustellwelle 54 um weniger als 180° um die Zustellachse 58 können auch kleinere Zustellungen in Radialrichtung bezüglich der Mittellängsachse 21 erfolgen.

In Fig. 3 ist der Manipulatorarm 43 alleine durch die Adapterplatte 44 beziehungsweise die Antriebseinheit 42 gehalten. Fig. 5 zeigt ein weiteres Ausführungsbeispiel der Erfindung, nämlich eine verbesserte Justierung beziehungsweise Lagerung des Manipulatorarms 43 in der Heizrohrbohrung 20. Der Manipulatorarm 62 bzw. die Vorschubwelle 60 besitzt hierzu eine radial einwärts gerichtete Nut 68 an ihrem Außenumfang, in welcher ein Spannelement 70 in Form einer hohlen Manschette einliegt. Deren Innenraum 72 ist mit einem Medium, zum Beispiel Druckluft befüllbar. Das Spannelement 70 stützt dann im aufgeblasenen Zustand den Manipulatorarm 62 an der Innenwand 74 der Heizrohrbohrung 20 ab und zentriert diesen. Eine Drehung des Manipulatorarms 43 um die Mittellängsachse 21 ist dennoch möglich, da zwischen diesem und dem Spannelement 70 ein Gleitlager 76 gebildet ist, auf welchem die Vorschubwelle 60 in dem in der Heizrohrbohrung 20 fixierten Spannelement 70 gleitet. In Fig. 5 ist außerdem nochmals die exzentrische Position der Antriebswelle 40 aus Fig. 4 dargestellt, so dass das Abtragwerkzeug 38 die Heizrohrbohrung 20 radial nach außen überragt. Das Spannelement 70 ist außerdem aktiv entleerbar, um diese zu komprimieren und so eine problemlose Entfernung des Spannelements 70 zusammen mit dem Manipulatorarm 43 aus der Heizrohrbohrung 20 zu ermöglichen.

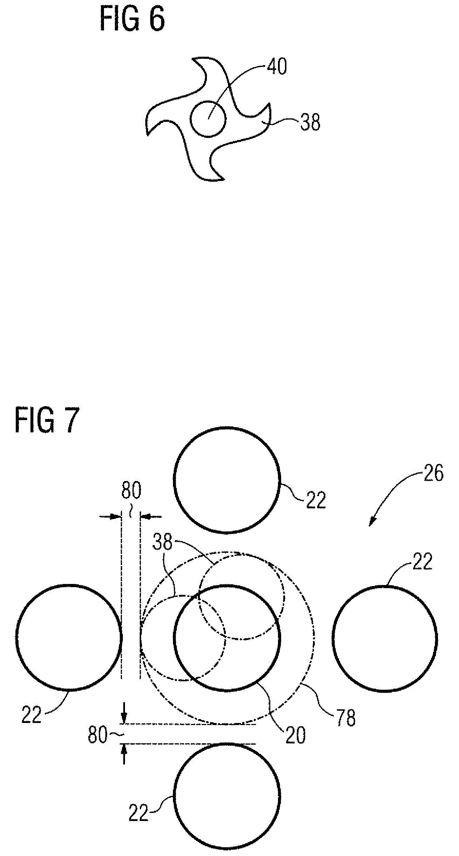

Fig. 6 zeigt beispielhaft eine Draufsicht in Richtung des Pfeils IV auf einen Abtragswerkzeug 38 in Form eines Fräsers, welcher auf eine Antriebswelle 40 aufgesetzt ist.

Fig. 7 zeigt in Draufsicht auf die Sekundärseite 26, also in Richtung des Pfeils IV in Fig. 3 eine zentrale Heizrohrbohrung 20 und diese umgebende benachbarte Dampferzeugerrohre 22. Das ursprüngliche Dampferzeugerrohr 22 ist also von der zentralen Heizrohrbohrung 20 bereits gezogen. Außerdem ist gestrichelt ein Umkreis 78 gezeigt, der denjenigen Bereich verdeutlicht, welcher von einem maximal zugestellten Abtragwerkzeug 38 erreichbar ist. Der Umkreis 78 ist so dimensioniert, dass stets ein Sicherheitsabstand 80 zu den benachbarten Dampferzeugerrohren 22 verbleibt, um bei der Probenahme diese nicht versehentlich durch das Abtragwerkzeug 38 zu beschädigen.

## Patentansprüche

1. Verfahren zur Entnahme einer Probe (50) einer Ablagerung (28) an einer Sekundärseite (26) einer Rohrbodenplatte (10) eines Dampferzeugers (4) eines Kernkraftwerks (2), bei dem:
- ein Dampferzeugerrohr (22) aus der Rohrbodenplatte (10) entfernt wird, um eine die Rohrbodenplatte (10) durchsetzende Heizrohrbohrung (20) freizulegen,
- von der der Sekundärseite (26) gegenüberliegenden Primärseite (24) der Rohrbodenplatte (10) ein Abtragwerkzeug (38) einer Vorrichtung (36) zur Entnahme der Probe (50) in die Heizrohrbohrung (20) eingeführt wird,
- mit dem Abtragwerkzeug (38) ein Teil der Ablagerung (28) als Probe (50) mechanisch gelöst wird,
- das Abtragwerkzeug (38) in einem Montagezustand (M) um eine parallel zur Mittellängsachse (21) der Heizrohrbohrung (20) verlaufende Antriebssachse (56) rotiert wird, um die Probe (50) zu lösen,
- die Antriebsachse (56) bezüglich der Mittellängsachse (21) in Radialrichtung (65) zugestellt wird und in Umfangrichtung (66) vorgeschoben wird, um die Probe (50) zu lösen,
- die Probe (50) durch die Heizrohrbohrung (20) zur Primärseite (24) transportiert und aus dem Dampferzeuger (4) entfernt wird,
- das Abtragwerkzeug (38) aus dem Dampferzeuger (4) entfernt wird.

2. Verfahren nach Anspruch 1, bei dem ein Träger (41) der Vorrichtung (36) in der Heizrohrbohrung (20) fixiert wird, und das Abtragwerkzeug (38) relativ zum Träger (41) bewegt wird, um die Probe (50) von der Ablagerung (28) zu lösen.

3. Verfahren nach Anspruch 1 oder 2, bei dem die Probe (50) nach dem Lösen in einem Sammelbehälter (52) der Vorrichtung (36) aufgenommen und zusammen mit diesem zur Primärseite (24) transportiert wird.

4. Vorrichtung (36) zur Entnahme einer Probe (50) einer Ablagerung (28) an einer Sekundärseite (26) einer Rohrbodenplatte (10) eines Dampferzeugers (4) eines Kernkraftwerks (2), mit :
- einem von einer der Sekundärseite (26) gegenüberliegenden Primärseite (24) der Rohrbodenplatte (10) in eine die Rohrbodenplatte (10) durchsetzende, freigelegte Heizrohrbohrung (20) einführbaren Abtragwerkzeug (38) zum mechanischen Lösen eines Teils der Ablagerung (28) als Probe (50), bei der das Abtragwerkzeug (38) im Montagezustand (M) um eine parallel zur Mittellängsachse (21) der Heizrohrbohrung (20) verlaufende Antriebsachse (56) rotierbar ist, um die Probe (50) von der Ablagerung (28) zu lösen, wobei die Antriebsachse (56) im Montagezustand (M) bezüglich der Mittellängsachse (21) in Radialrichtung (65) zustellbar und in Umfangrichtung (66) vorschiebbar ist, um die Probe (50) zu lösen.

5. Vorrichtung (36) nach Anspruch 4, mit einem in der Heizrohrbohrung (20) fixierbaren Träger (41), wobei das Abtragwerkzeug (38) relativ zum Träger (41) bewegbar ist.

6. Vorrichtung (36) nach Anspruch 5, mit einem am Außenumfang des Trägers (41) angeordneten, gegen eine Innenwand (74) der Heizrohrbohrung (20) abstützbaren Spannelement (70).

7. Vorrichtung (36) nach Anspruch 5 oder 6, bei dem der Träger (41) eine mit dem Abtragwerkzeug (38) fest verbundene, um eine zur Mittellängsachse (21) parallele Antriebsachse (56) rotierbare Antriebswelle (40) enthält, wobei die Antriebsachse (56) bezüglich der Mittellängsachse (21) in Radial-(65) und Umfangsrichtung (66) zustell- und vorschiebbar ist.

8. Vorrichtung (36) nach Anspruch 7, bei dem der Träger (41) eine um die Mittellängsachse (21) rotierbare Vorschubwelle (60) enthält, in der exzentrisch eine um eine zur Mittellängsachse (21) parallele Zustellachse (58) drehbare Zustellwelle (56) gelagert ist, in der exzentrisch die Antriebswelle (40) gelagert ist.

9. Vorrichtung (36) nach Anspruch 8, bei dem die Antriebswelle (40) in der Zustellwelle (54) und diese in der Vorschubwelle (60) mittels eines Gleitlagers gelagert ist.

10. Vorrichtung (36) nach einem der Ansprüche 4 bis 9, mit einem Sammelbehälter (52) zur Aufnahme der Probe (50).

## Claims

1. Method to remove a sample (50) of a deposit (28) on a secondary side (26) of a tube base plate (10) of a steam generator (4) of a nuclear power station (2) in which:
- a steam generator tube (22) is removed from the tube base plate (10) in order to expose a heating pipe bore (20) passing through the tube base plate (10),
- a removal tool (38) of a device (36) to remove the sample (50) is introduced into the heating tube bore (20) from the primary side (24) of the tube base plate (10) which lies opposite the secondary side (26),
- a part of the deposit (28) is mechanically detached as a sample (50) using the removal tool (38),
- the removal tool (38) is rotated in an assembled state (M) around a drive axle (56) which runs in parallel to the central longitudinal axis (21) of the heating tube bore (20) in order to detach the sample (50),
- the drive axle (56) is delivered in the radial direction (65) with regard to the central longitudinal axis (21) and is moved forward in the peripheral direction (66) in order to detach the sample (50),
- the sample (50) is transported to the primary side (24) through the heating tube bore (20) and is removed from the steam generator (4),
- the removal tool (38) is removed from the steam generator (4).

2. Method according to claim 1, in which a carrier (41) of the device (36) is fixed in the heating tube bore (20), and the removal tool (38) is moved relative to the carrier (41) in order to detach the sample (50) from the deposit (28).

3. Method according to claim 1 or 2, in which the sample (50) is received in a collection container (52) of the device (36) after the detachment and is transported to the primary side (24) together with this.

4. Device (36) to remove a sample (50) of a deposit (28) on a secondary side (26) of a tube base plate (10) of a steam generator (4) of a nuclear power station (2), having:
- a removal tool (38) which is able to be introduced into an exposed heating tube bore (20) which passes through the tube base plate (10) from a primary side (24) of the tube base plate (10) which lies opposite the secondary side (26) for the mechanical detachment of part of the deposit (28) as a sample (50), in the case of which the removal tool (38) is able to be rotated around a drive axle (56) which runs in parallel to the central longitudinal axis (21) of the heating tube bore (20) in the assembled state (M) in order to detach the sample (50) from the deposit (28), wherein the drive axle (56) is able to be delivered in the assembled state (M) in the radial direction (65) with regard to the central longitudinal axis (21) and is able to be moved forward in the peripheral direction (66) in order to detach the sample (50).

5. Device (36) according to claim 4, having a carrier (41) which is able to be fixed in the heating tube bore (20), wherein the removal tool (38) is able to be moved relative to the carrier (41). ,

6. Device (36) according to claim 5, having a clamping element (70) which is arranged on the outer periphery of the carrier (41), and is able to be supported against an inner wall (74) of the heating tube bore (20).

7. Device (36) according to claim 5 or 6, in which the carrier (41) contains a drive shaft (40) which is connected firmly to the removal tool (38) and is able to be rotated around a drive axle (56) which is in parallel to the central longitudinal axis (21), wherein the drive axle (56) is able to be delivered and moved forward in the radial (65) and peripheral direction (66) with regard to the central longitudinal axis (21).

8. Device (36) according to claim 7, in which the carrier (41) contains a feed shaft (60) which is able to be rotated around the central longitudinal axis (21), in which feed shaft (60) an in-feed shaft (56) which is able to be rotated around an in-feed axis (58) which is in parallel to the central longitudinal axis (21) is mounted eccentrically, in which in-feed shaft (56) the drive shaft (40) is mounted eccentrically.

9. Device (36) according to claim 8, in which the drive shaft (40) is mounted in the in-feed shaft (54) and this is mounted in the feed shaft (60) by means of a plain bearing.

10. Device (36) according to one of claims 4 to 9, having a collection container (52) to receive the sample (50).

## Revendications

1. Procédé de prélèvement d'un échantillon (50) d'un dépôt (28) sur un côté secondaire (26) d'une plaque de fond tubulaire (10) d'un générateur de vapeur (4) d'une centrale nucléaire (2), ledit procédé consistant à :
- retirer le tube de générateur de vapeur (22) de la plaque de fond tubulaire (10) pour dégager un orifice de tube de chauffage (20) traversant la plaque de fond tubulaire (10),
- introduire dans l'orifice de tube de chauffage (20) par le côté primaire (24) de la plaque de fond tubulaire (10) opposé au côté secondaire (26) un outil de retrait (38) d'un dispositif (36) de prélèvement de l'échantillon (50),
- détacher mécaniquement avec l'outil de retrait (38) une partie du dépôt (28) en tant qu'échantillon (50),
- faire tourner l'outil de retrait (38), dans un état de montage (M), autour d'un axe d'entraînement (56) parallèle à l'axe longitudinal médian afin de détacher l'échantillon (50),
- approcher l'axe d'entraînement (56) dans le sens radial (65) par rapport à l'axe longitudinal médian (21) et l'avancer dans le sens périphérique (66) afin de détacher l'échantillon (50),
- transporter l'échantillon (50) vers le côté primaire (24) en passant par l'orifice de tube de chauffage (20) et le retirer du générateur de vapeur (4),
- retirer l'outil de retrait (38) du générateur de vapeur (4).

2. Procédé selon la revendication 1, dans lequel un support (41) du dispositif (36) est immobilisé dans l'orifice de tube de chauffage (20) et l'outil de retrait (38) est déplacé par rapport au support (41) afin de détacher l'échantillon (50) du dépôt (28).

3. Procédé selon la revendication 1 ou la revendication 2, dans lequel l'échantillon (50), après avoir été détaché, est recueilli dans un collecteur (52) du dispositif (36) et transporté, avec celui-ci, vers le côté primaire (24).

4. Dispositif (36) de prélèvement d'un échantillon (50) d'un dépôt (28) sur un côté secondaire (26) d'une plaque de fond tubulaire (10) d'un générateur de vapeur (4) d'une centrale nucléaire (2), comportant :
- un outil de retrait (38) pouvant être introduit par un côté primaire (24) de la plaque de fond tubulaire (10) opposé au côté secondaire (26) dans un orifice de tube de chauffage (20) dégagé traversant la plaque de fond tubulaire (10) pour détacher mécaniquement une partie du dépôt (28) en tant qu'échantillon (50), dans lequel l'outil de retrait (38), dans un état de montage (M), peut être mis en rotation autour d'un axe d'entraînement (56) parallèle à l'axe longitudinal médian (25) afin de détacher l'échantillon (50) du dépôt (28), l'axe d'entraînement (56), dans l'état de montage (M), pouvant être rapproché dans le sens radial (65) par rapport à l'axe longitudinal médian (21) afin de détacher l'échantillon (50).

5. Dispositif (36) selon la revendication 4, comportant un support (41) pouvant être immobilisé dans l'orifice de tube de chauffage (20), l'outil de retrait (38) étant mobile par rapport au support (41).

6. Dispositif (36) selon la revendication 5, comportant un élément de serrage (70) disposé sur la circonférence extérieure du support (41) et pouvant s'appuyer contre une paroi intérieure (74) de l'orifice de tube de chauffage (20).

7. Dispositif (36) selon la revendication 5 ou la revendication 6, dans lequel le support (41) contient un arbre d'entraînement (40) parallèle à l'axe longitudinal médian (21), relié fixement à l'outil de retrait (38) et pouvant tourner autour d'un axe d'entraînement (56), l'axe d'entraînement (56) pouvant être approché et avancé dans le sens radial (65) et périphérique (66) par rapport à l'axe longitudinal médian (21).

8. Dispositif (36) selon la revendication 7, dans lequel le support (41) contient un arbre d'avance (60) pouvant tourner autour de l'axe longitudinal médian (21), arbre d'avance dans lequel un arbre d'approche (56) est positionné de façon excentrée et à pouvoir tourner autour d'un arbre d'approche (58) parallèle à l'axe longitudinal médian (21), arbre d'approche (56) dans lequel l'arbre d'entraînement (40) est positionné de façon excentrée.

9. Dispositif (36) selon la revendication 8, dans lequel l'arbre d'entraînement (40) est positionné dans l'arbre d'approche (54) et celui-ci dans l'arbre d'avance (60) au moyen d'un palier lisse.

10. Dispositif (36) selon l'une quelconque des revendications 4 à 9, comportant un collecteur (52) destiné à recueillir l'échantillon (50).
